# EUROPEAN PATENT APPLICATION

(11) **EP 4 280 359 A1**
(43) Date of publication of application: **22.11.2023**
(21) Application number: 22909234.1
(22) Date of filing: 04.07.2022
(51) Int. Cl.: H01M 50/209, H01M 50/262

(54) **BATTERY, BATTERY MODULE AND ELECTRIC ENERGY APPARATUS**

(30) Priority: 22.12.2021 CN 202123248522 U
(71) Applicant: Contemporary Amperex Technology Co., Limited, Ningde, Fujian 352100 (CN)
(72) Inventor: TANG, Yu, Ningde, Fujian 352100 (CN); ZENG, Zhimin, Ningde, Fujian 352100 (CN); YANG, Haiqi, Ningde, Fujian 352100 (CN); XU, Chenyi, Ningde, Fujian 352100 (CN); HUANG, Xiaoteng, Ningde, Fujian 352100 (CN); WANG, Peng, Ningde, Fujian 352100 (CN)
(74) Representative: Rowlands, Stuart Michael
(86) International application number: PCT/CN2022/103646
(87) International publication number: WO 2023/115903

(57) **Abstract**

Disclosed in the present application are a battery, a battery module and an electric energy apparatus. The battery comprises: a case, and a beam structure and at least one group of battery cells, which are arranged in the case, wherein the beam structure is fixed to the case; the beam structure is provided with an accommodating space; and external connecting wires of the at least one group of battery cells are provided in the accommodating space. In the present application, the external connecting wires of the battery cells are arranged in the accommodating space, so that the external connecting wires of the battery cells can be isolated from the battery cells, thereby preventing insulation risks of the external connecting wires caused by direct spraying by the battery cells after the battery cells lose control.

## Description

### Cross-Reference to Related Application

The present application claims priority to Chinese patent application no. 202123248522.8, entitled "BATTERY, BATTERY MODULE, AND ELECTRICALLY POWERED DEVICE" and filed on December 22, 2021, which is incorporated herein by reference in its entirety.

### Technical Field

The present application relates to a battery structure, and in particular to a battery, a battery module, and an electrically powered device.

### Background Art

In a conventional battery structure, cells are arranged in a housing of a battery. In order to reduce the size of the battery, the arrangement space in the housing of the battery is relatively compact, and an external connecting wire of the cells is generally placed in the housing of the battery in a gap between the cells and the housing. This will cause the external connecting wire of the cells to rub against the housing back and forth, resulting in electric leakage due to breakage of an insulated wire of the external connecting wire. In addition, the electrical connection between the external connecting wire and the cells may fail easily when an electrolyte spurts from the cells.

### Summary of the Invention

In view of the above problems, the present application provides a battery, a battery module, and an electrically powered device, which can solve the routing problem of connecting wires of cells.

In a first aspect, the present application provides a battery, including: a housing, and a beam structure and at least one group of cells which are arranged in the housing, where the beam structure is fixed to the housing, and an accommodating space is formed in the beam structure; and an external connecting wire of the at least one group of cells is arranged in the accommodating space.

In the technical solution of an embodiment of the present application, the accommodating space capable of accommodating the external connecting wire of the cells is formed in the beam structure inside the housing of the battery. The external connecting wire of the cells is arranged in the accommodating space, so that the external connecting wire of the cells can be isolated from the cells, preventing the external connecting wire from an insulation risk due to direct spurting after the cells are out of control.

In some embodiments, the battery further includes:
a clamp which is arranged in the accommodating space and which clamps and fixes the external connecting wire in the accommodating space to isolate the external connecting wire from the at least one group of cells.

In the embodiments of the present application, in order to place the external connecting wire more stably in the accommodating space, the clamp is arranged in the accommodating space, and the external connecting wire is fixed in the accommodating space by means of the clamp. Even if the battery is installed in a running vehicle, the external connecting wire will not rub against the beam structure during vibration, avoiding electric leakage due to breakage of an insulated package of the external connecting wire. In addition, the external connecting wire can be assembled more stably.

In some embodiments, the clamp is made of an insulating material.

In the embodiments of the present application, the clamp is made of the insulating material, so that the external connecting wire is prevented from a direct contact with the beam structure to further prevent the external connecting wire from being in contact with the beam structure after the insulated package of the external connecting wire is damaged, which results in electric leakage of the cells.

In some embodiments, the battery further includes:
a heat-conducting component, which is arranged in the accommodating space, and at least a part of which is attached to the external connecting wire and at least another part of which is attached to an inner wall of the beam structure.

In the embodiments of the present application, the heat-conducting component is also arranged in the accommodating space. The heat-conducting component can rapidly conduct heat generated by the external connecting wire due to overcurrent to the beam structure, facilitating better heat dissipation of the external connecting wire, and preventing the external connecting wire from an excessive local temperature rise.

In some embodiments, the heat-conducting component is made of a material that is a good conductor of heat.

In the embodiments of the present application, in order to ensure the heat dissipation effect of the heat-conducting component, the heat-conducting component is made that is a good conductor of heat, such as a metal, to ensure a better heat dissipation effect.

In some embodiments, the accommodating space is formed in a side surface at one end of the beam structure, the side surface being close to a connecting end of the external connecting wire of the cells.

In the embodiments of the present application, the accommodating space is formed in the beam structure close to the external connecting wire, which facilitates placement of the external connecting wire.

In some embodiments, the external connecting wire includes at least one of a high-voltage wire harness, a low-voltage wire harness and a cell connecting copper bar.

In the embodiments of the present application, all the external connecting wires on the cells can be arranged in the accommodating space, so that the entire external connecting wire of the cells is physically isolated from the cells as far as possible, preventing the connection between the cells and the external connecting wire such as a copper bar from being obstructed by an electrolyte spurted from the cells.

In some embodiments, the at least one group of cells is fixed to an inner wall of the housing by means of an adhesive.

In the embodiments of the present application, in order to make the structure of the battery more stable, the cells are fixed to the housing by means of an adhesive, so that the structures of the cells in the battery are also stable even when installed in a vehicle. In this way, the connection of the connecting wire between the cells is also more stable.

In some embodiments, the beam structure is of a case-type structure.

In the embodiments of the present application, the beam structure is of the case-type structure, so that the cells can be more stably placed on a surface of the beam structure.

In some embodiments, the beam structure includes at least one cavity, the accommodating space being arranged above the cavity.

The beam structure is provided with at least one cavity, which reduces the weight while meeting the supporting strength.

In some embodiments, the cavity is a through hole, and a plurality of cavities are arranged in parallel.

The cavity is a through hole running through the beam structure, so that a part of heat conducted to the surface of the beam structure can be transferred out via the through hole, which is beneficial to heat dissipation.

In some embodiments, the beam structure includes three vertical walls, the three vertical walls being spaced apart to form two accommodating spaces.

The routing space of the external connecting wire of the cells can be increased for routing of more wires.

In some embodiments, a vertical wall in the middle of the three vertical walls is configured to be higher than vertical walls on the two sides thereof.

The cells are gathered together and excessively concentrated, which is not beneficial to dissipation of heat generated by the external connecting wires due to overcurrent. The vertical wall in the middle being higher than the vertical walls on two sides not only plays the role of separating the external connecting wires of the cells but also avoids excessive heat concentration, and thus is beneficial to heat dissipation.

In some embodiments, the clamp is connected to one of the vertical wall in the middle and the two vertical walls on the two sides to form the accommodating space located at either side of the vertical wall in the middle.

The external connecting wire is fixed in the accommodating space by means of the clamp, so that the external connecting wire can be fixed, and abrasion of the external connecting wire in case of vibration is reduced, which ensures the safety.

In some embodiments, the beam structure is arranged between the at least one group of cells, and the at least one group of cells isolated at one side of the beam structure includes four groups of cells.

The beam structure can be used for routing of multiple groups of cells, so that the external connecting wire is more stably fixed in the beam structure, which ensures the safety.

In a second aspect, the present application provides an electrically powered device, including a device body and a power supply, the power supply using the battery or the battery module. The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic structural diagram of a vehicle according to some embodiments of the present application;
FIG. 2 shows a schematic structural diagram of a battery according to an embodiment of the present application;
FIG. 3 shows a schematic structural diagram of a battery module according to an embodiment of the present application;
FIG. 4 is a schematic exploded structural diagram of a battery cell according to some embodiments of the present application;
FIG. 5 is a schematic diagram of a battery structure according to some embodiments of the present application;
FIG. 6 is a schematic diagram of a battery structure according to some embodiments of the present application;
FIG. 7 is a schematic diagram of a battery structure according to some embodiments of the present application;
FIG. 8 is a partial view of a beam structure according to some embodiments of the present application; and
FIG. 9 is a partial enlarged view of a battery structure according to some embodiments of the present application.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

The inventor noted that in a battery case, the routing of high-voltage and low-voltage connecting wires between cells in a battery would rub against a housing of the battery back and forth during movement of the battery, resulting in electric leakage due to breakage of the connecting wire. Moreover, since the connecting wires of the cells are not isolated from the cells, the high-voltage and low-voltage connecting wires of the cells may be broken and stained when an electrolyte spurts from the cells, resulting in a degradation in the electrical connection effect.

In order to solve the problem of disordered routing of the cells in the battery, the applicant found through research that a beam structure arranged in the housing of the battery can be used for placing the high-voltage and low-voltage connecting wires of the cells. In this way, not only can the space in the housing of the battery be saved, but the connecting wires of the cells can also be better collected in the beam structure, better protecting the connecting wires of the cells, avoiding their rubbing against the housing of the battery, and also preventing the electrical connection performance of the connecting wires from being affected when the electrolyte spurts from the cells.

A battery charging method disclosed in the embodiments of the present application can be used to charge a lithium battery, a lithium iron phosphate battery, etc., which can ensure both the service life of the battery and the charging efficiency of the battery. A battery using the charging method of the embodiments of the present application can be used in power consuming apparatuses such as vehicles, ships, or aircrafts.

In an embodiment of the present application, a power consuming apparatus with a battery as a power supply is provided, and the power consuming apparatus may be, but not limited to, a mobile phone, a tablet, a notebook computer, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

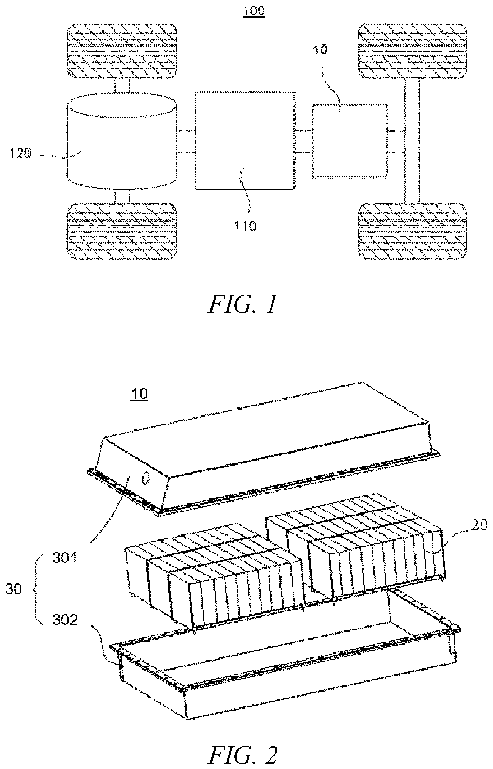

Referring to FIG. 1, FIG. 1 is a schematic structural diagram of a vehicle 100 according to some embodiments of the present application. The vehicle 100 may be a fuel vehicle, a gas vehicle or a new energy vehicle, and the new energy vehicle may be a battery electric vehicle, a hybrid vehicle or an extended-range vehicle, etc. A battery 10 is provided inside the vehicle 100, and the battery 10 may be arranged at a bottom, head or tail of the vehicle 100. The battery 10 may be used for supplying power to the vehicle 100. For example, the battery 10 may be used as a power supply for operating the vehicle 100. The vehicle 100 may further include a controller 110 and a motor 120. The controller 110 is used for controlling the battery 10 to supply power to the motor 120, for example, for power demands of the vehicle 100 in starting, navigation and driving.

In some embodiments of the present application, the battery 10 can not only serve as a power supply for operating the vehicle 100, but also serve as a power supply for driving the vehicle 100, instead of or partially instead of fuel or natural gas, to provide driving power for the vehicle 100.

In order to meet different power demands for use, the battery 10 may include a plurality of battery cells 210, the battery cell 210 referring to a minimum unit that constitutes a battery module or battery pack. The plurality of battery cells 210 may be connected in series and/or in parallel via electrode terminals for various applications. The battery mentioned in the present application includes a battery module or a battery pack. The plurality of battery cells 210 may be connected in series or in parallel or in a series-parallel, the series-parallel referring to a combination of the serial connection and the parallel connection. The battery 10 may also be referred to as a battery pack. In the embodiments of the present application, the plurality of battery cells 210 may directly form a battery pack, or may first form battery modules 20, and the battery modules 20 may then form a battery pack.

FIG. 2 shows a schematic structural diagram of a battery 10 according to an embodiment of the present application. In FIG. 2, the battery 10 may include a plurality of battery modules 20 and a case 30, the plurality of battery modules 20 being accommodated in the case 30. The case 30 is used to accommodate the battery cells 210 or the battery modules 20, so as to prevent a liquid or other foreign objects from affecting charging or discharging of the battery cells 210. The case 30 may be of a simple three-dimensional structure such as an individual cuboid, cylinder or sphere, or of a complex three-dimensional structure composed of simple three-dimensional structures such as a cuboid, a cylinder or a sphere, which is not limited in the embodiments of the present application. The case 30 may be made of alloy such as aluminum alloy and iron alloy, or a polymer material such as polycarbonate and polyisocyanurate foam plastics, or a composite material such as glass fibers plus epoxy resin, which is not limited in the embodiments of the present application.

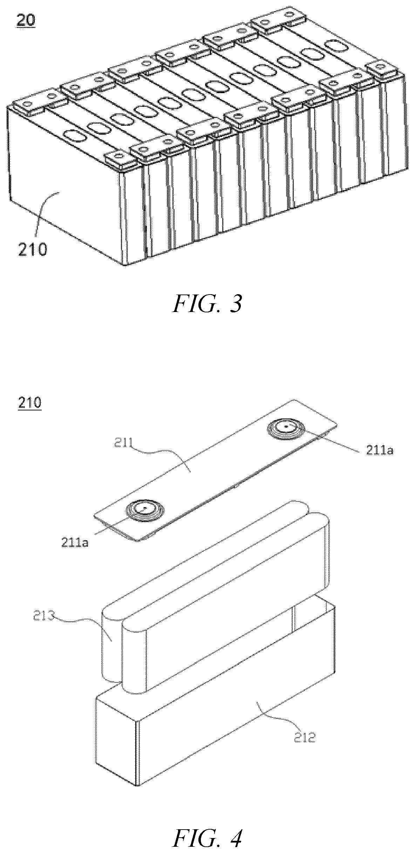

In some embodiments, the case 30 may include a first portion 301 and a second portion 302. The first portion 301 and the second portion 302 are fitted together in a covering manner, and the first portion 301 and the second portion 302 jointly define a space for accommodating the battery cells 210. The second portion 302 may be of a hollow structure with one end open, the first portion 301 may be of a plate-like structure, and the first portion 301 covers an open side of the second portion 302, so that the first portion 301 and the second portion 302 jointly define the space for accommodating the battery cells 210. The first portion 301 and the second portion 302 may also each be of a hollow structure with one side open, and an open side of the first portion 301 covers an open side of the second portion 302. FIG. 3 shows a schematic structural diagram of a battery module 20 according to an embodiment of the present application. In FIG. 3, the battery module 20 may include a plurality of battery cells 210. The plurality of battery cells 210 may be first connected in series or in parallel or in series-parallel to form a battery module 20, and the plurality of battery modules 20 may be then connected in series or in parallel or in series-parallel to form a battery 10. In the present application, the battery cell 210 may include a lithium-ion battery cell, a sodium-ion battery cell, a magnesium-ion battery cell, etc., which is limited in the embodiments of the present application. The battery cell 210 may be in a cylindrical shape, a flat shape, a cuboid shape or another shape, which is also not limited in the embodiments of the present application. The battery cells 210 are generally classified into three types depending on the way of package: cylindrical battery cells 210, prismatic battery cells 210 and pouch battery cells 210, which is also not be limited in the embodiments of the present application. However, for the sake of brevity, the following embodiments will be described by taking the prismatic battery cells 210 as an example.

FIG. 4 is a schematic exploded structural diagram of a battery cell 210 according to some embodiments of the present application. The battery cell 210 refers to a minimum unit that constitutes a battery. As shown in FIG. 4, the battery cell 210 includes an end cap 211, a shell 212, and a cell assembly 213.

The end cap 211 refers to a component that covers an opening of the shell 212 to isolate the internal environment of the battery cell 210 from the external environment. Without limitation, the end cap 211 may be shaped to adapt to the shape of the shell 212 so as to fit with the shell 212. Optionally, the end cap 211 may be made of a material (for example, aluminum alloy) with certain hardness and strength. In this way, the end cap 211 is less prone to deformation when subjected to compression and collision, so that the battery cells 210 may have a higher structural strength and the safety performance can also be improved. The end cap 211 may be provided with functional components such as electrode terminals 211a. The electrode terminals 211a may be used for electrical connection with the cell assembly 213 for outputting or inputting electrical power of the battery cell 210. In some embodiments, the end cap 211 may also be provided with a pressure relief mechanism for releasing internal pressure when the internal pressure or temperature of the battery cells 210 reaches a threshold value. The end cap 211 may also be made of various materials, such as copper, iron, aluminum, stainless steel, aluminum alloy, plastic, etc., which is not specially limited in the embodiments of the present application. In some embodiments, an insulating member may also be provided on an inner side of the end cap 211, and the insulating member may be used to isolate electrically connected components in the shell 212 from the end cap 211 to reduce the risk of short circuit. Exemplarily, the insulating member may be made of plastic, rubber, etc.

The shell 212 is an assembly for fitting with the end cap 211 to form the internal environment of the battery cells 210, where the formed internal environment may be used for accommodating the cell assembly 213, the electrolyte (not shown in the figure) and other components. The shell 212 and the end cap 211 may be independent components, an opening may be formed in the shell 212, and the end cap 211 covers the opening at the opening to form the internal environment of the battery cells 210. Without limitation, the end cap 211 and the shell 212 may also be integrated. Specifically, the end cap 211 and the shell 212 may form a common joint surface before other components are put into the housing. The end cap 211 may cover the shell 212 when the interior of the shell 212 needs to be packaged. The shell 212 may have various shapes and sizes, such as a cuboid shape, a cylindrical shape, a hexagonal prism shape, etc. Specifically, the shape of the shell 212 may be determined according to the specific shape and dimensions of the cell assembly 213. The shell 212 may be made of various materials, such as copper, iron, aluminum, stainless steel, aluminum alloy and plastic, which is not specially limited in the embodiments of the present application.

The cell assembly 213 is a component in the battery cell 210 where an electrochemical reaction takes place. The shell 212 may contain one or more cell assemblies 213. The cell assembly 213 is mainly formed by winding or stacking a positive electrode plate and a negative electrode plate, and a separator is usually provided between the positive electrode plate and the negative electrode plate. Parts of the positive electrode plate and the negative electrode plate that have an active material constitute a main body portion of the cell assembly, and parts of the positive electrode plate and the negative electrode plate that have no active material each constitute a tab (not shown in the figure). A positive tab and a negative tab may be both located at one end of the main body portion or respectively at two ends of the main body portion. During the charging and discharging of the battery, a positive active material and a negative active material react with the electrolyte, and the tabs are connected to the electrode terminals to form a current loop.

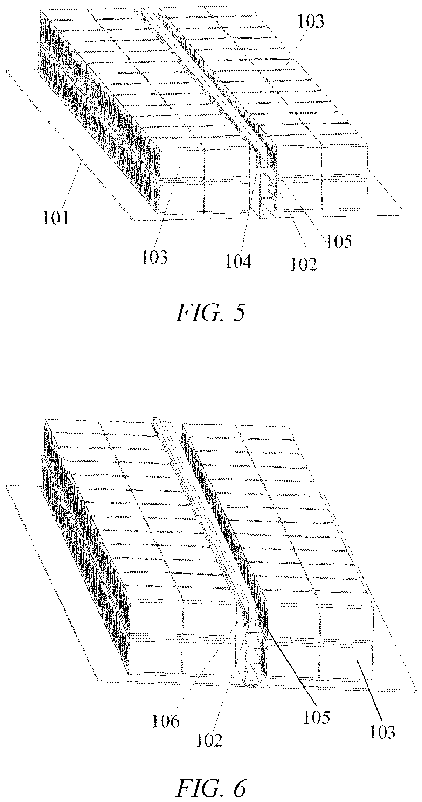

Referring to FIG. 5, FIG. 5 is a schematic diagram of a battery structure according to some embodiments of the present application. The battery according to an embodiment of the present application includes: a housing 101, and a beam structure 102 and at least one group of cells 103 which are arranged in the housing 101. The beam structure 102 is fixed to the housing 101, an accommodating space 104 is formed in the beam structure 102; and an external connecting wire 105 of the at least one group of cells 103 is arranged in the accommodating space 104.

FIG. 5 shows a partial structure of the housing 101 of the battery. It should be understood by those skilled in the art that the housing of the battery may be configured into a case-shaped structure, a cylindrical structure, etc., which is not specifically limited in the present application.

In an embodiment of the present application, a plurality of cells 103 may be provided, which are connected in series or in parallel according to voltage or current required by an electrically powered device. The arrangement of the cells is set as required, and the cells should be arranged as compactly as possible and occupy a small volume. As shown in FIG. 5, the beam structure 102 is placed between two groups of cells 103, and a connecting end of the connecting wire 105 of the cells is close to the accommodating space 104 of the beam structure 102. The accommodating spaces are arranged on two sides of the beam structure 102 to facilitate placement of the external connecting wires 105 of the cells 103 in the accommodating spaces 104.

The beam structure 102 is a reinforcement structure placed in the housing 101 of the battery for supporting the housing 101 of the battery, so that the overall structure of the battery is firmer. Therefore, the battery according to the embodiments of the present application is applicable to various electrically powered devices, such as electric vehicles.

In the technical solution of an embodiment of the present application, the accommodating space 104 capable of accommodating the external connecting wire 105 of the cells 103 is formed in the beam structure 102 inside the housing 101 of the battery. The external connecting wire 105 of the cells 103 is arranged in the accommodating space 104, so that the external connecting wire 105 of the cells 103 can be isolated from the cells 103, preventing the external connecting wire 105 from an insulation risk due to direct spurting after the cells 103 are out of control.

Referring to FIG. 6, FIG. 6 is a schematic diagram of a battery structure according to some embodiments of the present application. The battery according to an embodiment of the present application further includes:
a clamp 106 which is arranged in the accommodating space 104 and which clamps and fixes the external connecting wire 105 in the accommodating space 104 to isolate the external connecting wire 105 from the at least one group of cells 102. In order to assemble the external connecting wire 105 of the battery more stably in the beam structure 102, the external connecting wire 105 of the battery is clamped in the accommodating space 104 using the clamp 106. As shown in FIG. 6, the clamp 106 is of an inverted L-shaped structure. By means of the structure of the clamp 106, the external connecting wire 105 can be enclosed in the accommodating space 104, so that the external connecting wire 105 is completely isolated from the cells 102.

In an embodiment of the present application, in order to place the external connecting wire 105 more stably in the accommodating space 104, the clamp 106 is arranged in the accommodating space 104, and the external connecting wire 105 is fixed in the accommodating space 104 by means of the clamp 106. Even if the battery is installed in a running vehicle, the external connecting wire will not rub against the beam structure 102 during vibration, avoiding electric leakage due to breakage of an insulated package of the external connecting wire 105. In addition, the external connecting wire 105 can be assembled more stably.

In an embodiment of the present application, the clamp 106 is made of an insulating material. As an example, the clamp 106 is made of plastic, resin, rubber, etc.

According to an embodiment of the present application, the clamp 106 is made of the insulating material, so that the external connecting wire 105 is prevented from a direct contact with the beam structure 102 to further prevent the external connecting wire 105 from being in contact with the beam structure 102 after the insulated package of the external connecting wire is damaged, which results in electric leakage of the cells.

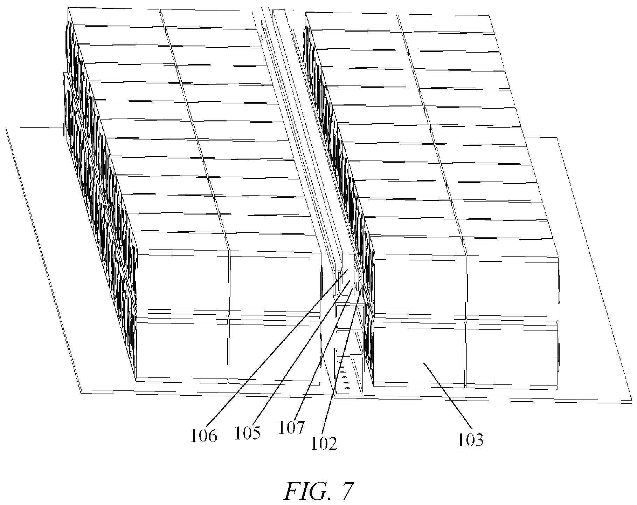

Referring to FIG. 7, FIG. 7 is a schematic diagram of a battery structure according to some embodiments of the present application. The battery according to an embodiment of the present application further includes:
a heat-conducting component 107, which is arranged in the accommodating space 104, and at least a part of which is attached to the external connecting wire 105 and at least another part of which is attached to an inner wall of the beam structure 102.

As shown in FIG. 7, the heat-conducting component 107 is also attached between the external connecting wire 105 and the beam structure 102. In this way, heat generated by the external connecting wire 105 can be rapidly conducted to the beam structure 102 by means of the heat-conducting component 107 for rapid heat dissipation, preventing fire of the cells due to overheating of the external connecting wire 105.

In an embodiment of the present application, the heat-conducting component 107 is also arranged in the accommodating space 104. The heat-conducting component 107 can rapidly conduct heat generated by the external connecting wire 105 due to overcurrent to the beam structure 102, facilitating better heat dissipation of the external connecting wire 105, and preventing the external connecting wire 105 from an excessive local temperature rise.

In an embodiment of the present application, the heat-conducting component 107 is made of a material that is a good conductor of heat.

As an example, the heat-conducting component 107 according to an embodiment of the present application may be made of metal such as aluminum, copper and iron, or made of metal alloy. In order to ensure the heat-conducting effect in the embodiments of the present application, the beam structure 102 is also preferably made of a material that is a good conductor of heat, for example, made of metal such as aluminum, copper and iron, or made of metal alloy.

In an embodiment of the present application, in order to ensure the heat dissipation effect of the heat-conducting component 107, the heat-conducting component 107 is made of a material that is good conductor of heat, such as metal, to ensure a better heat dissipation effect.

In an embodiment of the present application, the accommodating space 104 is formed in a side surface at one end of the beam structure 102, the side surface being close to a connecting end of the external connecting wire 105 of the cells 103.

In an embodiment of the present application, the accommodating space 104 is formed in the beam structure 102 close to the external connecting wire 105, which facilitates placement of the external connecting wire 105.

In an embodiment of the present application, the external connecting wire 105 includes at least one of a high-voltage wire harness, a low-voltage wire harness and a cell connecting copper bar.

In an embodiment of the present application, all the external connecting wires 105 on the cells 103 can be arranged in the accommodating space, so that the entire external connecting wire 105 of the cells 103 is physically isolated from the cells 103 as far as possible, preventing the connection between the cells and the external connecting wire 105 such as a copper bar from being obstructed by the electrolyte spurted from the cells 103.

In an embodiment of the present application, the at least one group of cells 103 is fixed to an inner wall of the housing 101 by means of an adhesive.

In an embodiment of the present application, in order to make the structure of the battery more stable, the cells 103 are fixed to the housing 101 by means of an adhesive, so that the structures of the cells 103 in the battery are stable even when installed in a vehicle. In this way, the connection of the connecting wire 105 between the cells 103 is also more stable. In an embodiment of the present application, as shown in FIGS. 5, 6 and 7, the beam structure 102 according to the embodiment of the present disclosure is of a case-type structure.

In the embodiment of the present application, the beam structure 102 is of the case-type structure, so that the cells can be more stably placed on a surface of the beam structure. The beam structure 102 may also be of other shapes and structures, such as a cylindrical structure and a polygonal columnar structure.

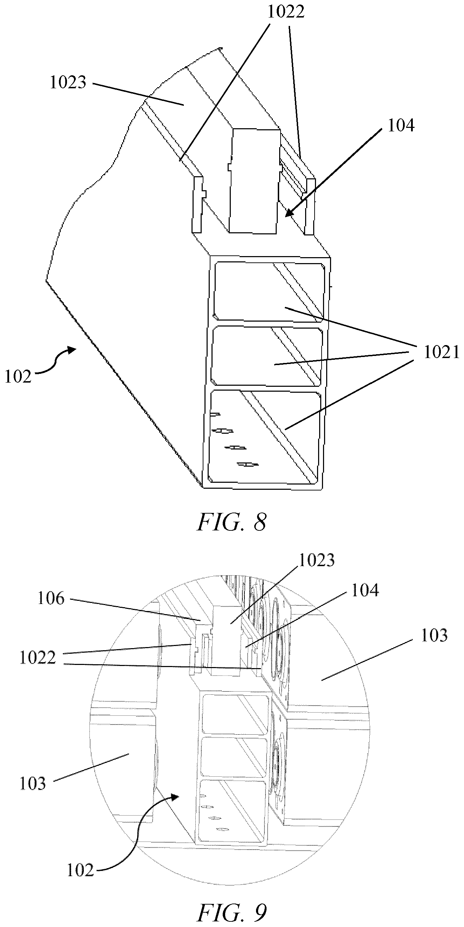

In an embodiment of the present application, as shown in FIGS. 8 and 9, the beam structure 102 includes at least one cavity 1021, the accommodating space 104 being arranged above the cavity 1021.

The cavity 1021 may be a plurality of hollow cavities spaced apart in a length direction of the beam structure 102, or may be one hollow cavity extending in the length direction of the beam structure 102. The hollow cavity may completely run through two ends of the beam structure 102, or may run through one end or neither of the two ends of the beam structure 102. The cavity 1021 may be a hollow cavity with an air hole.

The cavity 1021 is in the shape of a long strip, a square, a circle, etc., which is not specifically limited herein.

The accommodating space 104 is arranged above the cavity 1021, i.e., on the other side of the beam structure opposite the side where the housing 101 is fixed.

By providing the cavity 1021, the overall weight of the beam structure 102 can be reduced, which is beneficial to save on the material and reduce the cost.

In an embodiment of the present application, as shown in FIGS. 8 and 9, the cavity 1021 is a through hole, and a plurality of cavities 1021 are arranged in parallel.

The through hole refers to a hollow cavity or an elongated slot that runs through two end faces of the beam structure 102.

The parallel arrangement of the plurality of cavities 1021 means that the orientations of the plurality of cavities 1021 on the beam structure 102 are the same.

The provision of the cavity 1021 is beneficial to conduct heat from the external connecting wire into the cavity 1021, so as to increase the heat dissipation area and make the heat dissipation faster.

In an embodiment of the present application, the beam structure 102 includes three vertical walls, the three vertical walls being spaced apart to form two accommodating spaces 104. The vertical wall refers to a plate-like structure extending in the length direction of the beam structure 102.

The three vertical walls being spaced apart means that they are arranged at certain distance in a circumferential direction of a beam.

The routing space of the external connecting wire of the cells can be increased for routing of more wires.

In an embodiment of the present application, as shown in FIGS. 8 and 9, a vertical wall 1022 in the middle of the three vertical walls is configured to be higher than vertical walls 1023 on two sides thereof.

The vertical wall 1022 in the middle being higher than the vertical walls 1023 on two sides means that the vertical wall 1022 in the middle protrudes further from the vertical walls 1023 on two sides along a plane perpendicular to the length direction of the beam structure.

The cells are gathered together and excessively concentrated, which is not beneficial to dissipation of heat generated by the external connecting wires due to overcurrent. The vertical wall in the middle being higher than the vertical walls on two sides not only plays the role of separating the external connecting wires of the cells but also avoids excessive heat concentration, and thus is beneficial to heat dissipation.

In an embodiment of the present application, as shown in FIGS. 8 and 9, the clamp 106 is connected to one of the vertical wall 1022 in the middle and the vertical walls 1023 on two sides to form the accommodating space 104 located at either side of the vertical wall 1022 in the middle.

The clamp 106 being connected to one of the vertical wall 1022 in the middle and the vertical walls 1023 on two sides include: either of the vertical walls 1023 on two sides being connected to the clamp 106, and the vertical wall 1022 in the middle being also connected to the clamp 106; either of the vertical walls 1023 on two sides being connected to the clamp 106, and the vertical wall 1022 in the middle being not connected to the clamp 106; and the vertical wall 1022 in the middle being connected to the clamp 106, and neither of the vertical walls 1023 on two sides being connected to the clamp 106.

The external connecting wire is fixed in the accommodating space by means of the clamp, so that the external connecting wire can be fixed, and abrasion of the external connecting wire in case of vibration is reduced, which ensures the safety.

In an embodiment of the present application, as shown in FIG. 9, the beam structure 102 is arranged between at least one group of cells 103, and the at least one group of cells 103 separated at one side of the beam structure 102 includes four groups of cells 103.

The beam structure 102 being arranged between at least one group of cells 103 means that the cells 103 are arranged at two sides of the beam structure 102, and the cells 103 at the two sides of the beam structure 102 form at least one group of cells 103.

The at least one group of cells 103 separated at one side of the beam structure 102 including four groups of cells 103 means that four groups of cells 103 are provided at one side of the beam structure 102.

The beam structure 102 can be used for routing of multiple groups of cells, so that the external connecting wire is more stably fixed in the beam structure, which ensures the safety. According to some embodiments of the present application, the present application provides a battery module, the battery module being formed by arranging and connecting a plurality of batteries described in the above embodiments.

According to some embodiments of the present application, the present application further describes an electrically powered device, comprising a device body and a power supply, the power supply using the battery or the battery module.

According to an embodiment of the present application, the electrically powered device may be any of the aforementioned devices or systems using a battery or a battery module.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery, **characterized by** comprising: a housing (101), and a beam structure (102) and at least one group of cells (103) which are arranged in the housing (101), wherein the beam structure (102) is fixed to the housing (101), and an accommodating space (104) is formed in the beam structure (102); and an external connecting wire (105) of the at least one group of cells (103) is arranged in the accommodating space (104).

2. The battery according to claim 1, **characterized by** further comprising:
a clamp (106) which is arranged in the accommodating space (104) and which clamps and fixes the external connecting wire (105) in the accommodating space (104) to isolate the external connecting wire (105) from the at least one group of cells (103).

3. The battery according to claim 2, **characterized in that** the clamp (106) is made of an insulating material.

4. The battery according to any one of claims 1 to 3, **characterized by** further comprising:
a heat-conducting component (107), which is arranged in the accommodating space (104), and at least a part of which is attached to the external connecting wire (105) and at least another part of which is attached to an inner wall of the beam structure (102).

5. The battery according to claim 4, **characterized in that** the heat-conducting component (107) is made of a material that is a good conductor of heat.

6. The battery according to claim 5, **characterized in that** the accommodating space (104) is formed in a side surface at one end of the beam structure (102), the side surface being close to a connecting end of the external connecting wire (105) of the cells (103).

7. The battery according to any one of claims 1 to 6, **characterized in that** the external connecting wire (105) comprises at least one of a high-voltage wire harness, a low-voltage wire harness and a cell connecting copper bar.

8. The battery according to any one of claims 1 to 7, **characterized in that** the at least one group of cells (103) is fixed to an inner wall of the housing (101) by means of an adhesive.

9. The battery according to any one of claims 1 to 8, **characterized in that** the beam structure (102) is of a case-type structure.

10. The battery according to any one of claims 1 to 9, **characterized in that** the beam structure (102) comprises at least one cavity (1021), the accommodating space (104) being arranged above the cavity (1021).

11. The battery according to claim 10, **characterized in that** the cavity (1021) is a through hole, and a plurality of cavities (1021) are arranged in parallel.

12. The battery according to any one of claims 2 to 11, **characterized in that** the beam structure (102) comprises three vertical walls, the three vertical walls being spaced apart to form two accommodating spaces (104).

13. The battery according to claim 12, **characterized in that** a vertical wall (1022) in the middle of the three vertical walls is configured to be higher than vertical walls (1023) on two sides thereof.

14. The battery according to either of claims 12 to 13, **characterized in that** the clamp (106) is connected to one of the vertical wall (1022) in the middle and the vertical walls (1023) on two sides to form the accommodating space (104) located at either side of the vertical wall (1022) in the middle.

15. The battery according to any one of claims 1 to 14, **characterized in that** the beam structure (102) is arranged between the at least one group of cells (103), and the at least one group of cells (103) separated at one side of the beam structure (102) comprises four groups of cells (103).

16. An electrically powered device, **characterized by** comprising a device body and a power supply, the power supply using a battery according to any one of claims 1 to 15.
